(19)

Europäisches
Patentamt
European
Patent Office
Office européen
des brevets

(11) **EP 4 349 906 A1**

(12) **EUROPEAN PATENT APPLICATION**
published in accordance with Art. 153(4) EPC

(43) Date of publication:
**10.04.2024 Bulletin 2024/15**

(21) Application number: **22828203.4**

(22) Date of filing: **06.06.2022**

(51) International Patent Classification (IPC):
***C08L 15/00*** (2006.01)      ***C08L 63/00*** (2006.01)
***H01M 8/0284*** (2016.01)     ***H01M 8/10*** (2016.01)

(52) Cooperative Patent Classification (CPC):
**C08L 15/00; C08L 63/00; H01M 8/0284;**
**H01M 8/10;** Y02E 60/50

(86) International application number:
**PCT/JP2022/022781**

(87) International publication number:
**WO 2022/270286 (29.12.2022 Gazette 2022/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.06.2021   JP 2021102456**

(71) Applicant: **Tomoegawa Co., Ltd.**
**Tokyo 104-8335 (JP)**

(72) Inventors:
• **KONDOU Yasufumi**
**Shizuoka-shi, Shizuoka 424-0831 (JP)**
• **MIZUTANI Daisuke**
**Shizuoka-shi, Shizuoka 424-0831 (JP)**

(74) Representative: **V.O.**
**P.O. Box 87930**
**2508 DH Den Haag (NL)**

(54) **SOLID POLYMER FUEL CELL SEALING MATERIAL**

(57)    The present invention provides a polymer electrolyte fuel cell sealing material excellent in hot water resistance and acid resistance, in which sealing performance does not decrease even in a case where a polymer electrolyte fuel cell is driven for a long period of time.

The polymer electrolyte fuel cell sealing material of the present invention contains a carboxyl group-containing acrylonitrile-butadiene copolymer (a) and an epoxy resin (b), in which the component (a) is preferably a carboxyl group-containing acrylonitrile-butadiene copolymer in which a content of acrylonitrile is 5% to 50% by mass and a carboxyl group equivalent calculated from a number-average molecular weight is 100 to 20,000.

EP 4 349 906 A1

**Description**

[Technical Field]

The present invention relates to a polymer electrolyte fuel cell (PEFC) sealing material excellent in hot water resistance and acid resistance, in which sealing performance does not decrease even in a case where a polymer electrolyte fuel cell is driven for a long period of time.

[Background Art]

A fuel cell is a power generation system in which, by continuously supplying a fuel and an oxidant, chemical energy as electric power is extracted in a case where the fuel and the oxidant undergo an electrochemical reaction. The fuel cell using the power generation system by the electrochemical reaction utilizes a reverse reaction of electrolysis of water, that is, a mechanism in which hydrogen and oxygen are bonded to generate electrons and water, and has been attracting attention in recent years because of its high efficiency and excellent environmental characteristics.

The fuel cell is classified into a phosphoric acid fuel cell, a molten carbonate fuel cell, a solid oxide fuel cell, an alkaline fuel cell, and a polymer electrolyte fuel cell according to the type of electrolyte. In recent years, particularly, a polymer electrolyte fuel cell which starts at normal temperature and has advantages such as an extremely short start-up time has been attracting attention. In a basic structure of a single cell constituting the polymer electrolyte fuel cell, gas diffusion electrodes having a catalyst layer are bonded to both sides of a solid polymer electrolyte membrane (hereinafter, this bonded body is referred to as Membrane Electrode Assembly (MEA)), and separators are placed on both outer surface sides thereof.

A gas flow path for supplying a reaction gas such as a fuel gas and an oxidant gas to each electrode and carrying off generated water or a surplus gas is formed in a portion of each separator in contact with the MEA.

The supply of the reaction gas into the gas flow path formed between each separator and the MEA, and the discharge of the reaction gas and the generated water from the gas flow path are carried out in a method in which a penetrating hole called a manifold hole is provided in an edge portion of at least one separator of a pair of separators, and an inlet and outlet of each gas flow path is communicated with the manifold hole, so that the reaction gas is distributed from each manifold hole to each gas flow path.

In addition, in order to prevent the fuel gas or the oxidant gas supplied to the gas flow path from leaking to the outside or to prevent the two types of gas from mixing with each other, a polymer electrolyte fuel cell sealing material is placed between the pair of separators to surround a portion of the MEA where the electrodes and the solid polymer electrolyte membrane are formed, that is, an outer periphery of a power generation region. The polymer electrolyte fuel cell sealing material also seals a periphery of each manifold hole. In addition, for the purpose of protecting the solid electrolyte membrane, the periphery of both sides of the solid polymer electrolyte membrane may be sealed with a sealing material having a two-layer configuration of a base material film and an adhesive.

Since the solid polymer electrolyte membrane to which the above-described polymer electrolyte fuel cell sealing material is adhered is typically formed of a fluorine-based resin having a perfluoroalkyl group as a main chain, polymer electrolyte fuel cell sealing materials in the related art have had problem of insufficient adhesiveness.

On the other hand, Patent Document 1 discloses a method of adhering a solid polymer electrolyte membrane by thermocompression bonding, as a method for achieving favorable sealing performance. In addition, Patent Document 2 discloses a method of improving adhesiveness by subjecting a surface of the solid polymer electrolyte membrane to an ion exchange treatment. Furthermore, Patent Document 3 discloses a method of improving adhesiveness by blending a fluorine atom-containing acrylic monomer to the adhesive.

However, in any of the methods, it has been difficult to reliably seal the periphery of the solid polymer electrolyte membrane. In particular, in a case where the polymer electrolyte fuel cell is driven for a long period of time, the polymer electrolyte fuel cell sealing material is exposed to hot water of approximately 95°C, but it has been difficult to maintain high sealing performance to prevent hydrogen leakage in such a hot water environment.

[Citation List]

[Patent Documents]

[Patent Document 1]
Japanese Unexamined Patent Application, First Publication No. H6-119928
[Patent Document 2]

Japanese Unexamined Patent Application, First Publication No. H9-199145
[Patent Document 3]
Japanese Unexamined Patent Application, First Publication No. 2004-269782

[Summary of Invention]

[Problems to be Solved by the Invention]

The present invention has been made in view of the above-described circumstances, and an object of the present invention is to provide a polymer electrolyte fuel cell sealing material excellent in hot water resistance and acid resistance, in which sealing performance does not decrease even in a case where a polymer electrolyte fuel cell is driven for a long period of time.

[Means for Solving the Problems]

As a result of intensive studies, the present inventors have found that, by containing a carboxyl group-containing acrylonitrile-butadiene copolymer (a) and an epoxy resin (b), a polymer electrolyte fuel cell sealing material can exhibit high adhesiveness to a solid polymer electrolyte membrane formed of a fluorine-based resin, and reliably seals and prevents hydrogen leakage even in a case where a polymer electrolyte fuel cell is driven for a long period of time and exposed to hot water and an acidic aqueous solution of approximately 95°C, thereby completing the present invention.
The present invention has the following aspects.

[1] A polymer electrolyte fuel cell sealing material containing:

(a) a carboxyl group-containing acrylonitrile-butadiene copolymer; and
(b) an epoxy resin.

[2] The polymer electrolyte fuel cell sealing material according to [1],
in which the component (a) is a carboxyl group-containing acrylonitrile-butadiene copolymer in which a content of acrylonitrile is 5% to 50% by mass and a carboxyl group equivalent calculated from a number-average molecular weight is 100 to 20,000.
[3] The polymer electrolyte fuel cell sealing material according to [1],
in which the component (b) is an epoxy resin in which a number-average molecular weight is 400 to 10,000 and an epoxy group equivalent is 200 to 5,000.
[4] The polymer electrolyte fuel cell sealing material according to [1],
in which the component (b) is 1 to 300 parts by mass with respect to 100 parts by mass of the component (a).

[Effects of the Invention]

According to the present invention, it is possible to provide a polymer electrolyte fuel cell sealing material excellent in hot water resistance and acid resistance, in which sealing performance does not decrease even in a case where a polymer electrolyte fuel cell is driven for a long period of time.

[Brief Description of Drawings]

[FIG. 1] A perspective view representing an example of the polymer electrolyte fuel cell sealing material according to the present invention.
[FIG. 2] A perspective view representing an example of the polymer electrolyte fuel cell sealing material according to the present invention.
[FIG. 3] A perspective view representing an example of the polymer electrolyte fuel cell sealing material according to the present invention.
[FIG. 4] A perspective view representing an example in which the polymer electrolyte fuel cell sealing material according to the present invention is used for a single cell.
[FIG. 5] A diagram for describing a measurement of an adhesive strength of the polymer electrolyte fuel cell sealing material according to the present invention; (a) a diagram in a case where both surfaces of the solid polymer electrolyte membrane are adhered to a base material of the sealing material through an adhesive member; (b) a diagram in a case where two sealing materials are adhered to each other through an adhesive member of the sealing material.

[Embodiments for Carrying out the Invention]

Hereinafter, the present invention will be described in detail.

The carboxyl group-containing acrylonitrile-butadiene copolymer (a) used in the polymer electrolyte fuel cell sealing material (hereinafter, referred to as a sealing material) according to the present invention plays a role of maintaining an appropriate melt viscosity of the sealing material at an initial stage of heating, and also imparts favorable flexibility and adhesiveness to a cured sealing material. By containing the carboxyl group-containing acrylonitrile-butadiene copolymer (a), it is possible to form a sealing material which has favorable adhesion to the solid polymer electrolyte membrane, the electrode, and the separator, and does not crack. As the carboxyl group-containing acrylonitrile-butadiene copolymer (a), known copolymers can be used without limitation; and a copolymer in which a content of acrylonitrile is 5% to 50% by mass is preferable, and a copolymer in which a content of acrylonitrile is 10% to 40% by mass is more preferable. In a case where the content of acrylonitrile is less than the above-described range, solubility in a solvent and compatibility with other components are decreased, and thus uniformity of the sealing material to be obtained tends to deteriorate. On the other hand, in a case where the content of acrylonitrile is more than the above-described range, the flexibility of the sealing material to be obtained decreases and sealing performance tends to deteriorate. Moreover, the solubility in a solvent is decreased, and thus it tends to be difficult to apply the sealing material as a coating material.

As the carboxyl group-containing acrylonitrile-butadiene copolymer, a copolymer in which a carboxyl group equivalent calculated from a number-average molecular weight is in a range of 100 to 20,000 is preferable, and a copolymer in which a carboxyl group equivalent calculated from a number-average molecular weight is 200 to 10,000 is more preferable. In a case where the carboxyl group equivalent is less than the above-described range, reactivity with other components is excessively high, and storage stability of the sealing material to be obtained tends to decrease. On the other hand, in a case where the carboxyl group equivalent is more than the above-described range, since the reactivity with other components is insufficient, the sealing material to be obtained has low viscosity and easily flows due to heat. As a result, in a case where the sealing material is heated, the viscosity of the sealing material is reduced, the sealing material is likely to foam or flow out, and thus thermal stability tends to deteriorate.

The carboxyl group equivalent calculated from a number-average molecular weight is obtained by dividing the number-average molecular weight (Mn) by the number of carboxyl groups (the number of functional groups) per molecule, and is represented by the following expression.

$$\text{Carboxyl group equivalent} = \text{Mn/number of functional groups}$$

The epoxy resin (b) imparts hot water resistance and acid resistance to the sealing material by reacting the epoxy resin (b) with (a) or by reacting the epoxy resin (b) with a curing agent.

As the epoxy resin (b), a bisphenol A-type epoxy resin, a bisphenol F-type epoxy resin, a bisphenol AD-type epoxy resin, a bisphenol S-type epoxy resin, an alicyclic epoxy resin, a phenol novolac-type epoxy resin, a cresol novolac-type epoxy resin, a glycidyl ether-type epoxy resin, and the like are exemplary examples, and the epoxy resin can be used alone or in combination of two or more thereof. In addition, the epoxy resin (b) preferably has a number-average molecular weight of 400 to 10,000. In a case where the number-average molecular weight is less than the above-described range, reactivity with other components is excessively high, and storage stability of the sealing material to be obtained tends to decrease. In a case of being more than the above-described range, compatibility with other components is decreased, and thus uniformity of the sealing material to be obtained tends to deteriorate.

Furthermore, the epoxy resin (b) preferably has an epoxy group equivalent of 200 to 5,000. In a case where the epoxy group equivalent is less than the above-described range, reactivity with other components is excessively high, and storage stability of the sealing material to be obtained tends to decrease. In a case of being more than the above-described range, since the reactivity with other components is insufficient, the sealing material to be obtained has low viscosity and easily flows due to heat. As a result, in a case where the sealing material is heated, the viscosity of the sealing material is reduced, the sealing material is likely to foam or flow out, and thus thermal stability tends to decrease.

As a ratio of the components, the component (b) is preferably 1 to 300 parts by mass and more preferably 30 to 200 parts by mass with respect to 100 parts by mass of the component (a). In a case where the component (b) is less than the above-described range, reactivity of the sealing material is decreased, insolubilization and infusibilization are unlikely to proceed even due to heating, and thus the thermal stability tends to decrease. On the other hand, in a case of being more than the above-described range, flexibility of the sealing material to be obtained decreases and sealing performance tends to deteriorate.

Here, a content (A) of a carboxyl group in carboxyl-modified acrylonitrile-butadiene rubber can be determined by a content (parts by mass) of the carboxyl-modified acrylonitrile-butadiene rubber/carboxyl group equivalent (g/eq) of the carboxyl-modified acrylonitrile-butadiene rubber. In addition, a content (B) of an epoxy group in the epoxy resin can be determined by a content (parts by mass) of the epoxy resin/epoxy equivalent (g/eq) of the epoxy resin.

In the present invention, a relationship between the above-described content (A) of a carboxyl group and the above-described content (B) of an epoxy group is preferably content (B) of epoxy group $\geq$ content (A) of carboxyl group $\times$ 0.1. In a case where content (B) of epoxy group < content (A) of carboxyl group $\times$ 0.1, reactivity of the sealing material is decreased, insolubilization and infusibilization are unlikely to proceed even due to heating, and thus the thermal stability tends to decrease.

In addition to each of the essential components (a) and (b), a reaction accelerating agent such as an organic peroxide, imidazoles, and triphenylphosphine may be added to the sealing material. By the addition, it is also possible to control a state of the sealing material at normal temperature to a good B stage. In addition, the hot water resistance and acid resistance of the sealing material to be obtained are also improved.

Furthermore, for the purpose of controlling melt viscosity, improving thermal conductivity, and imparting flame retardancy, and the like, a filler having an average particle size of 1 $\mu$m or less may be added. As the filler, inorganic fillers such as silica, alumina, magnesia, aluminum nitride, boron nitride, titanium oxide, calcium carbonate, and aluminum hydroxide, and organic fillers such as a silicone resin and a fluororesin are exemplary examples. In a case where the filler is used, a content thereof is preferably 1% to 40% by mass in the sealing material.

Hereinafter, the present invention will be described based on the drawings.

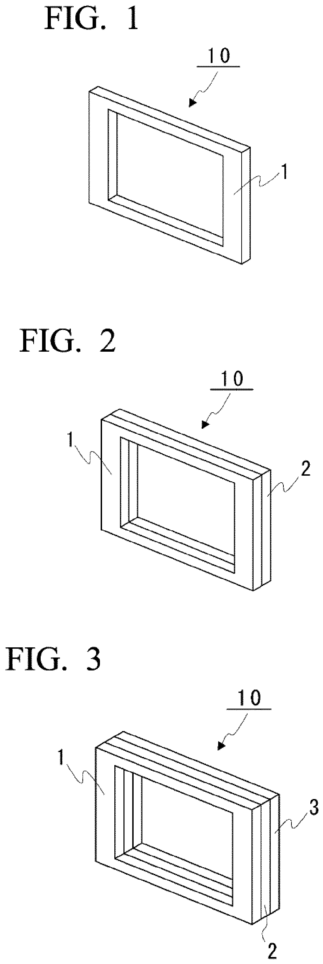

FIGS. 1 to 3 are perspective views representing examples of the polymer electrolyte fuel cell sealing material according to the present invention.

As shown in FIG. 1, a polymer electrolyte fuel cell sealing material 10 (hereinafter, referred to as a sealing material 10) according to the present invention can include a sheet-shaped adhesive member 1 having a rectangular frame shape. In addition, the shape of the sheet-shaped adhesive member 1 is not limited to the rectangular frame shape, and is appropriately selected according to a shape of the fuel cell, such as a circular frame shape. The adhesive member 1 in FIG. 1 contains the carboxyl group-containing acrylonitrile-butadiene copolymer (a) the epoxy resin (b) described above.

In addition, as shown in FIG. 2, the sealing material 10 may have a two-layer configuration including a base material 2 in contact with the adhesive member 1. Furthermore, as shown in FIG. 3, the sealing material 10 may have a three-layer configuration in which the adhesive member 1, the base material 2, and an adhesive layer 3 are laminated.

The sealing material according to the embodiment of the present invention can be formed by, for example, a method in which a mixture of the carboxyl group-containing acrylonitrile-butadiene copolymer (a) and the epoxy resin (b) described above is applied onto one surface of a peelable protective film to form a sheet, and the sheet is cut out to a frame shape.

In a case of producing such a sealing material, first, a coating material containing at least the above-described carboxyl group-containing acrylonitrile-butadiene copolymer (a), the above-described epoxy resin (b), and a solvent is prepared. Next, the coating material may be applied onto one surface of the protective film so that a thickness of the sealing material after drying is preferably 1 to 50 $\mu$m and more preferably 3 to 20 $\mu$m, and then dried. In addition, in order to protect the sealing material, it is preferable that another peelable protective film is further provided on the sealing material which has been formed on the protective film, and in this case, the sealing material may be produced by a method in which the coating material is applied onto the protective film and dried to form the sealing material, and then another protective film is provided thereon. The protective film is peeled off in a case where the sealing material is used.

As the peelable protective film, plastic films such as polyethylene, polypropylene, vinyl chloride, a fluorine-based resin, and silicone, and films of polyethylene terephthalate, polyethylene naphthalate, paper, and the like, coated with silicone or the like to impart peelability are exemplary examples.

In addition, as the solvent used for the coating material, one or more of organic solvents such as hydrocarbons, alcohols, ketones, and ethers, water, and the like can be preferably used, and an amount thereof used may be adjusted appropriately to provide an appropriate viscosity as the coating material. In addition, properties of the coating material may be any of a solution, an emulsion, or a suspension, and may be appropriately selected according to an application device used, environmental conditions, and the like.

In addition, for the sealing material 10 having the two-layer configuration as shown in FIG. 2, a base material film serving as the base material 2 may be used instead of the above-described protective film. As the base material film, heat-resistant plastic films made of polyimide, polyphenylene sulfide, polyethersulfone, polyetheretherketone, a liquid crystal polymer, polyethylene terephthalate, polyethylene naphthalate, or the like, and composite heat-resistant films such as epoxy resin-glass cloth are exemplary examples; and from the viewpoint of hot water resistance, acid resistance, and cost, polyethylene naphthalate is particularly preferable. A thickness of the base material film is preferably 12 to 125 $\mu$m and more preferably 12 to 50 $\mu$m. In a case of being less than the above-described range, the sealing material to be obtained is thin and is easily broken due to an external force, so that defects tend to occur during processing, and in a case of being more than the above-described range, the sealing material to be obtained is thick and stiff, so that flexibility and followability of the sealing material to an adherend decreases, and the sealing performance tends to deteriorate.

In addition, for the sealing material 10 having the three-layer configuration as shown in FIG. 3, after forming, on the base material film serving as the base material 2, the adhesive member 1 consisting of the coating material which is obtained from at least the above-described carboxyl group-containing acrylonitrile-butadiene copolymer (a), the above-described epoxy resin (b), and the solvent, the sealing material 10 can be obtained by applying a coating material constituting the adhesive layer 3 onto a surface of the base material film on an opposite side to the surface of the adhesive member 1 and drying the coating material.

The adhesive layer 3 may have the same composition as that of the adhesive member 1 described above, or may be other adhesives.

As the other adhesives, adhesives containing a thermoplastic resin or a rubber-based resin can be exemplary examples.

As the above-described thermoplastic resin, for example, polyolefin resins or styrene resins such as polyethylene (PE), polypropylene (PP), and polybutylene, polyoxymethylene (POM), polyvinyl chloride (PVC), polyphenylene sulfide (PPS), polyphenylene ether (PPE), modified PPE, polysulfone (PSU), polyether sulfone (PESF), polyketone (PK), polyetherketone (PEK), polyetheretherketone (PEEK), polyethernitrile (PEN), and polyacrylonitrile (PAN) are exemplary examples. As a particularly preferred thermoplastic resin, ultra-high-molecular-weight polyethylene, polyphenylene sulfide, polysulfone, polyethernitrile, polyacrylonitrile, and the like can be exemplary examples. These thermoplastic resins may be used alone or in combination of two or more kinds thereof.

In addition, as the rubber-based resin, for example, synthetic rubbers such as methyl methacrylate-butadiene rubber (MBR), ethylene propylene rubber (EPR), acrylonitrile-butadiene rubber (NBR), styrene-butadiene rubber (SBR), chlorosulfonated polyethylene (CSP), chloroprene rubber (CR), isoprene rubber (IR), butyl rubber (IIR), acrylic rubber, fluororubber, silicone rubber, butadiene-based rubber (MBS), polyphenylene sulfide (PPS), and ethylene-propylene dimethyl rubber (EPDM); styrene-based elastomers such as a styrene-butadiene-styrene (SBS) copolymer and a styreneisoprene-styrene (SIS) copolymer; and an olefin-based elastomer, a urethane-based elastomer, a polyamide-based elastomer, a butadiene-based elastomer (MBS), a vinyl chloride-based elastomer (TPVC), and the like can be exemplary examples. These rubber-based resins may be used alone or in combination of two or more kinds thereof.

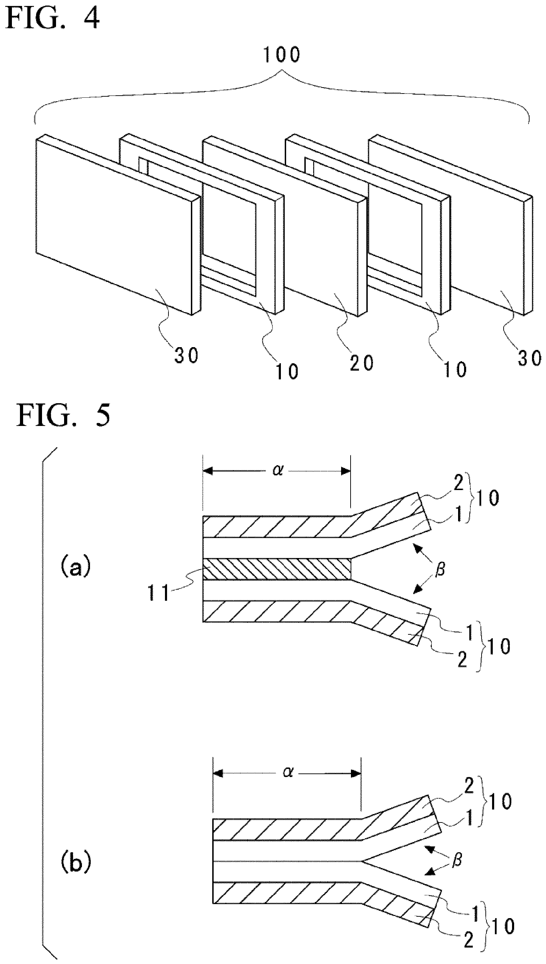

The sealing material according to the present invention is used for a single cell in a stack of polymer electrolyte fuel cells, and for example, is used for a single cell as shown in FIG. 4.

FIG. 4 shows a single cell 100, in which the sealing materials 10 are in contact with both surfaces of an electrode 20, and a separator 30 is in contact with a surface of the sealing material 10, which is not in contact with the electrode 20. As the electrode 20, a membrane electrode assembly (MEA) for a fuel cell, a catalyst coated membrane (CCM) for a fuel cell, and a gas diffusion layer (gas diffusion electrode; GDE) can be exemplary examples. As the separator 30, a fluorine-based resin having a perfluoroalkyl group as a main chain or the like can be an exemplary example.

[Examples]

Hereinafter, the present invention will be described specifically with reference to Examples.

[Examples 1 to 7 and Comparative Examples 1 to 4]

(Production of sealing material)

The component (a), the component (b), other components, and methyl ethyl ketone (MEK) as a solvent were mixed at the mass ratios shown in Table 1 to prepare a coating material for an adhesive member.

Next, the coating material was applied onto one surface of a polyethylene naphthalate film having a thickness of 25 μm so that a thickness after drying was 20 μm, and then dried in a hot air circulation oven set at 100°C, thereby obtaining a sealing material in which an adhesive member was laminated on one surface of the polyethylene naphthalate film.

Details of each component used are as follows.

<Carboxyl group-containing acrylonitrile-butadiene copolymer (a)>

· Carboxyl group-containing acrylonitrile-butadiene copolymer: number-average molecular weight of 300,000, carboxyl group equivalent calculated from number-average molecular weight of 1,500 g/eq, content of acrylonitrile of 27% by mass

<Epoxy resin (b)>

· Bisphenol A-type epoxy resin: number-average molecular weight of 900, epoxy group equivalent of 450 g/eq
· Bisphenol A-type epoxy resin: number-average molecular weight of 5,500, epoxy group equivalent of 3,000 g/eq
· Trifunctional epoxy resin: number-average molecular weight of 630, functional group equivalent of 210 g/eq

<Other components>

· Reaction accelerating agent: imidazole compound (2-ethyl-4-methylimidazole)
· Acrylonitrile-butadiene copolymer: number-average molecular weight of 300,000, content of acrylonitrile of 27% by mass
· Carboxyl group-containing polyester resin: number-average molecular weight of 20,000, carboxyl group equivalent of 18,000 g/eq
· Ethylene-methyl acrylate-glycidyl methacrylate copolymer: number-average molecular weight of 150,000, functional group equivalent of 2,500 g/eq

[Table 1]

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Component (a) | Carboxyl group-containing acrylonitrile-butadiene copolymer: number-average molecular weight of 300,000, carboxyl group equivalent of 1,500 g/eq | 100 | 100 | 100 | 100 | 100 | 100 | 100 | 100 | - | - | - |
| | Bisphenol A-type epoxy resin: number-average molecular weight of 900, epoxy group equivalent of 450 g/eq | 30 | 200 | - | - | 200 | - | - | - | 200 | - | - |

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Component (b) | Bisphenol A-type epoxy resin: number-average molecular weight of 5,500, functional group equivalent of 3,000 g/eq | - | - | 30 | 200 | - | 200 | - | | | | |
| | Trifunctional epoxy resin: number-average molecular weight of 630, functional group equivalent of 210 g/eq | - | - | - | - | - | - | 2 | - | - | 2 | - |
| | Imidazole compound: 2-ethyl-4-methylimidazole | - | - | - | - | 2 | 2 | - | - | 2 | - | 2 |

EP 4 349 906 A1

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Other components | Acrylonitrile-butadiene copolymer: number-average molecular weight of 300,000 | - | - | - | - | - | - | - | - | 100 | - | - |
| | Carboxyl group-conlaining polyester resin: number-average molecular weight of 20,000, carboxyl group equivalent of 18,000 g/eq | - | - | - | - | - | - | - | - | - | 100 | - |

EP 4 349 906 A1

(continued)

| | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|
| Ethylene-methyl acrylate-glycidyl methacrylate copolymer: number-average molecular weight of 150,000, functional group equivalent of 2,500 g/eq | - | - | - | - | - | - | - | - | - | - | 100 |

[Evaluation]

(1) Adhesion evaluation (I)

(1-1) Production of test piece

Two sheets obtained by cutting the sealing material obtained in each of Examples to have a width of 25 mm and a length of 100 mm were prepared.

In addition, a solid polymer electrolyte membrane (manufactured by DuPont, trade name: Nafion membrane) was prepared separately, and cut into a width of 25 mm and a length of 80 mm.

Next, these members were attached as shown in FIG. 5 (see (a)). As shown in (a) of FIG. 5, a film obtained by attaching the sealing materials 10 in which the adhesive member 1 was brought into contact with both surfaces of the above-described solid polymer electrolyte membrane 11 using a roll laminator was used as a test piece. Lamination conditions in this case were set to a temperature of 50°C, a pressure of 4 N/cm, and a compression speed of 1 m/min. A length $\alpha$ of the contact between the solid polymer electrolyte membrane 11 and the adhesive member 1 was 80 mm.

A portion $\beta$ of the sealing material 10 which was not attached to the solid polymer electrolyte membrane 11 in (a) of FIG. 5 was an attachment portion in a case of being fixed to a universal tensile tester described below, and the portion $\beta$ was fixed in the universal tensile tester after attaching a polyimide film (not shown) to the adhesive member 1 for measurement of an adhesive strength.

(1-2) Measurement of initial adhesive strength

A T-peel strength of the test piece in the above-described (1-1) was measured using a universal tensile tester as it was without being immersed in a sulfuric acid aqueous solution (pH: 2) at 95°C. That is, the adhesive strength was measured in a state in which the upper $\beta$ in (a) of FIG. 5 was pulled in an upward direction of the drawing and the lower $\beta$ was pulled in a downward direction of the drawing at the same time. The tensile speed was set to 50 mm/min.

The results of the adhesive strength are shown in Table 2 as Adhesion evaluation (I) - Initial adhesive strength.

As the numerical value of the adhesive strength is larger, the adhesive force is more excellent.

(1-3) Measurement of acid resistance test 250 H

The test piece in the above-described (1-1) was immersed in a sulfuric acid aqueous solution (pH: 2) at 95°C for 250 hours, moisture on the surface of the test piece was wiped off, and the test piece was left for 1 hour in an environment of 25°C and 50 %RH. Thereafter, the T-peel strength was measured in the same manner as in (1-2) described above. The results thereof are shown in Table 2 as Adhesion evaluation (I) - Acid resistance test 250 H.

The evaluation of the test results was performed as follows.

Good (A): the test piece after the immersion did not undergo interfacial peeling between the solid electrolyte membrane and the adhesive member; in addition, as for a fracture form in the T-peel measurement, fracture occurred in the layer of the solid electrolyte membrane, but the interfacial peeling between the solid electrolyte membrane and the adhesive member did not occur.

Poor (X): the test piece after the immersion underwent the interfacial peeling between the solid electrolyte membrane and the adhesive member, or as for the fracture form in the T-peel measurement, the interfacial peeling between the solid electrolyte membrane and the adhesive member occurred.

(1-4) Measurement of acid resistance test 500 H

The test piece in the above-described (1-1) was immersed in a sulfuric acid aqueous solution (pH: 2) at 95°C for 500 hours, moisture on the surface of the test piece was wiped off, and the test piece was left for 1 hour in an environment of 25°C and 50 %RH. Thereafter, the T-peel strength was measured in the same manner as in (1-2) described above. The results thereof are shown in Table 2 as Adhesion evaluation (I) - Acid resistance test 500 H. The evaluation of the test results was performed in the same manner as in (1-3) described above.

(1-5) Measurement of acid resistance test 750 H

The test piece in the above-described (1-1) was immersed in a sulfuric acid aqueous solution (pH: 2) at 95°C for 750 hours, moisture on the surface of the test piece was wiped off, and the test piece was left for 1 hour in an environment of 25°C and 50 %RH. Thereafter, the T-peel strength was measured in the same manner as in (1-2) described above. The results thereof are shown in Table 2 as Adhesion evaluation (I) - Acid resistance test 750 H. The evaluation of the test results was performed in the same manner as in (1-3) described above.

(2) Adhesion evaluation (II)

(2-1) Production of test piece

Two sheets obtained by cutting the sealing material obtained in each of Examples to have a width of 25 mm and a length of 100 mm were prepared.

Next, these two sheets were attached as shown in FIG. 5 (see (b)). As shown in (b) of FIG. 5, a film in which the adhesive members 1 of the sealing material 10 were brought into contact with each other and attached using a roll laminator was used as a test piece. A length $\alpha$ in which the adhesive members 1 were brought into contact with each other was set to 80 mm. In addition, lamination conditions in this case were set to a temperature of 100°C, a pressure of 4 N/cm, and a compression speed of 1 m/min.

A portion $\beta$ of the sealing material 10 to which the adhesive member 1 was not attached in (b) of FIG. 5 was an attachment portion in a case of being fixed to a universal tensile tester described below, and the portion $\beta$ was fixed in the universal tensile tester after attaching a polyimide film (not shown) to the adhesive member 1 for measurement of an adhesive strength.

(2-2) Measurement of initial adhesive strength

A T-peel strength of the test piece in the above-described (2-1) was measured using a universal tensile tester as it was without being immersed in a sulfuric acid aqueous solution (pH: 2) at 95°C. That is, the adhesive strength was measured in a state in which the upper $\beta$ in (b) of FIG. 5 was pulled in a upward direction of the drawing and the lower $\beta$ was pulled in a downward direction of the drawing at the same time. The tensile speed was set to 50 mm/min.

The results of the adhesive strength are shown in Table 2 as Adhesion evaluation (II) - Initial adhesive strength.

As the numerical value of the adhesive strength is larger, the adhesive force is more excellent.

(2-3) Measurement of acid resistance test 250 H

The test piece in the above-described (2-1) was immersed in a sulfuric acid aqueous solution (pH: 2) at 95°C for 250 hours, moisture on the surface of the test piece was wiped off, and the test piece was left for 1 hour in an environment of 25°C and 50 %RH. Thereafter, the T-peel strength was measured in the same manner as in (2-2) described above. The results thereof are shown in Table 2 as Adhesion evaluation (II) - Acid resistance test 250 H.

In the evaluation of the test results, an adhesive strength of 0.8 N/cm or more was regarded as the good (A), and an adhesive strength of less than 0.8 N/cm was regarded as the poor (X).

(2-4) Measurement of acid resistance test 500 H

After immersing the test piece in the above-described (2-1) in a sulfuric acid aqueous solution (pH: 2) at 95°C for 500 hours, the T-peel strength was measured in the same manner as in (2-2) described above. The results thereof are shown in Table 2 as Adhesion evaluation B - Acid resistance test 500 H. The evaluation of the test results was performed in the same manner as in (2-3) described above.

(2-5) Measurement of acid resistance test 750 H

The test piece in the above-described (2-1) was immersed in a sulfuric acid aqueous solution (pH: 2) at 95°C for 750 hours, moisture on the surface of the test piece was wiped off, and the test piece was left for 1 hour in an environment of 25°C and 50 %RH. Thereafter, the T-peel strength was measured in the same manner as in (2-2) described above. The results thereof are shown in Table 2 as Adhesion evaluation (II) - Acid resistance test 750 H. The evaluation of the test results was performed in the same manner as in (2-3) described above.

(3) Mass change rate

(3-1) Production of test piece

In addition, two sheets of the sealing material obtained in each of Examples were prepared, and the two sheets were bonded to each other using a roll laminator such that the adhesive layers overlapped each other. Lamination conditions in this case were set to a temperature of 100°C, a pressure of 4 N/cm, and a compression speed of 1 m/min.

**EP 4 349 906 A1**

Next, the above-described sample was cut into 50 mm × 50 mm, and used as a test piece.

(3-2) Measurement of acid resistance test 250 H

Masses of the test piece in the above-described (3-1) before and after immersion in a sulfuric acid aqueous solution (pH: 2) at 95°C for 250 hours were measured, and a mass change rate was calculated based on the following expression.

$$\text{Mass change rate} = [\text{Mass of test piece before immersion/Mass of test piece after immersion}] \times 100 \, (\%)$$

As the test piece after the immersion, the test piece was immersed in a sulfuric acid aqueous solution (pH: 2) at 95°C for 250 hours, moisture on the surface of the test piece was wiped off, and the test piece was left for 1 hour in an environment of 25°C and 50 %RH.
The evaluation of the test results is shown in Table 2 as Mass change - Acid resistance test 250H, in which a case where the mass change rate was 5% or less was regarded as good (A), a case where the mass change rate was 5% or more and less than 10% was regarded as fair (B), and a case where the mass change rate was 10% or more was regarded as poor (X).

(3-3) Measurement of acid resistance test 500 H

The test piece in the above-described (3-1) was immersed in a sulfuric acid aqueous solution (pH: 2) at 95°C for 500 hours, moisture on the surface of the test piece was wiped off, and the test piece was left for 1 hour in an environment of 25°C and 50 %RH. Thereafter, the mass change rate was obtained in the same manner as in (3-2) described above. The results thereof are shown in Table 2 as Mass change - Acid resistance test 500 H. The evaluation of the test results was performed in the same manner as in (3-2) described above.

(3-4) Measurement of acid resistance test 750 H

The test piece in the above-described (3-1) was immersed in a sulfuric acid aqueous solution (pH: 2) at 95°C for 750 hours, moisture on the surface of the test piece was wiped off, and the test piece was left for 1 hour in an environment of 25°C and 50 %RH. Thereafter, the mass change rate was obtained in the same manner as in (3-2) described above. The results thereof are shown in Table 2 as Mass change - Acid resistance test 750 H. The evaluation of the test results was performed in the same manner as in (3-2) described above.

14

[Table 2]

| | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Adhesion evaluation (I) (electrolyte membrane lamination) | Initial adhesive strength (V/cm) | 3.2 | 3.5 | 2.8 | 2.1 | 3.8 | 2.2 | 3.0 | 2.8 | 3.3 | 1.7 | 4.5 |
| | Acid resistance test 250 H | A | A | A | A | A | A | A | A | A | A | A |
| | Acid resistance test 500 H | A | A | A | A | A | A | A | A | X | A | A |
| | Acid resistance test 750 H | A | A | A | A | A | A | A | X | X | X | A |
| Adhesion evaluation (II) (adhesive members) | Initial adhesive strength (V/cm) | 4.8 | 3.9 | 3.5 | 2.9 | 4.1 | 2.6 | 6.2 | 6.3 | 3.6 | 7.2 | 6.1 |
| | Acid resistance test 250 H | A | A | A | A | A | A | A | A | A | A | X |
| | Acid resistance test 500 H | A | A | A | A | A | A | A | A | A | A | X |
| | Acid resistance test 750 H | A | A | A | A | A | A | A | X | X | A | X |

EP 4 349 906 A1

(continued)

| Mass change | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| | Acid resistance test 250 H | A | A | A | A | A | A | A | B | B | B | B |
| | Acid resistance test 500 H | A | A | A | A | A | A | B | B | X | B | X |
| | Acid resistance test 750 H | A | B | A | B | A | A | B | X | X | X | X |

As is clear from Table 2 described above, in Adhesion evaluation (I) - Acid resistance test 750 H, it was confirmed that, for the sealing materials of Examples 1 to 7, the fracture form in the T-peel measurement was fracture within layers of the solid electrolyte membrane, and the adhesion between the solid electrolyte membrane and the adhesive member was good. In addition, in Adhesion evaluation (II) - Acid resistance test 750 H, it was confirmed that, for the sealing materials of Examples 1 to 7, the adhesive strength was 0.8 N/cm or more and the heat resistance and acid resistance were excellent.

On the other hand, in Adhesion evaluation (I) - Acid resistance test 750 H, for the sealing materials of Comparative Examples 1 to 3, there was peeling between the solid electrolyte membrane and the adhesive member, or as for the fracture form in the T-peel measurement, the interfacial peeling between the solid electrolyte membrane and the adhesive member occurred.

In addition, in Adhesion evaluation (II) - Acid resistance test 750 H, it was confirmed that, for the sealing materials of Comparative Examples 1, 2, and 4, the adhesive strength was less than 0.8 N/cm, and the sealing materials had practical problems in deteriorated heat resistance and acid resistance as a sealing material.

In addition, in Mass change - Acid resistance test 750 H, it was confirmed that, for the sealing materials of Examples 1 to 7, the change was small as the mass change rate of less than 10%, and the heat resistance and acid resistance were excellent. On the other hand, in Mass change - Acid resistance test 750 H, it was confirmed that, for the sealing materials of Comparative Examples 1 to 4, the mass change rate was 10% or more, and the sealing materials had practical problems in deteriorated heat resistance and acid resistance as a sealing material.

[Industrial Applicability]

The polymer electrolyte fuel cell sealing material according to the present invention is excellent in hot water resistance and acid resistance, and maintains high sealing performance, and thus the polymer electrolyte fuel cell sealing material according to the present invention can be driven for a long period of time in a hot water environment.

[Reference Signs List]

1: Adhesive member
2: Base material
3: Adhesive layer
10: Polymer electrolyte fuel cell sealing material

**Claims**

1. A polymer electrolyte fuel cell sealing material comprising:

    (a) a carboxyl group-containing acrylonitrile-butadiene copolymer; and
    (b) an epoxy resin.

2. The polymer electrolyte fuel cell sealing material according to Claim 1, wherein the component (a) is a carboxyl group-containing acrylonitrile-butadiene copolymer in which a content of acrylonitrile is 5% to 50% by mass and a carboxyl group equivalent calculated from a number-average molecular weight is 100 to 20,000.

3. The polymer electrolyte fuel cell sealing material according to Claim 1, wherein the component (b) is an epoxy resin in which a number-average molecular weight is 400 to 10,000 and an epoxy group equivalent is 200 to 5,000.

4. The polymer electrolyte fuel cell sealing material according to Claim 1, wherein the component (b) is 1 to 300 parts by mass with respect to 100 parts by mass of the component (a).

# FIG. 1

# FIG. 2

# FIG. 3

# FIG. 4

# FIG. 5

## INTERNATIONAL SEARCH REPORT

International application No.

**PCT/JP2022/022781**

### A. CLASSIFICATION OF SUBJECT MATTER

*C08L 15/00*(2006.01)i; *C08L 63/00*(2006.01)i; *H01M 8/0284*(2016.01)i; *H01M 8/10*(2016.01)i
FI: H01M8/0284; H01M8/10 101; C08L15/00; C08L63/00 Z

According to International Patent Classification (IPC) or to both national classification and IPC

### B. FIELDS SEARCHED

Minimum documentation searched (classification system followed by classification symbols)

C08L15/00; C08L63/00; H01M8/0284; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 112048250 A (SHANGHAI WENSHI LYUJI TECHNOLOGY CO., LTD.) 08 December 2020 (2020-12-08) claims 1, 9, paragraphs [0002], [0003], [0025]-[0032], [0036], [0049], fig. 1 | 1, 4 |
| A | | 2-3 |
| A | JP 2004-507063 A (DANA CORP.) 04 March 2004 (2004-03-04) claims 1, 22, 33, paragraphs [0010]-[0012], [0055], [0070], table 5, table 3 | 1-4 |
| A | JP 2005-47262 A (KOKOKU INTECH CO., LTD.) 24 February 2005 (2005-02-24) paragraphs [0001], [0016]-[0022] | 1-4 |
| P, A | CN 113555577 A (SOUTHERN UNIVERSITY OF SCIENCE AND TECHNOLOGY) 26 October 2021 (2021-10-26) paragraphs [0064]-[0074] | 1-4 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 July 2022** | **26 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/022781**

| Patent document cited in search report | | | Publication date (day/month/year) | Patent family member(s) | | | Publication date (day/month/year) |
|---|---|---|---|---|---|---|---|
| CN | 112048250 | A | 08 December 2020 | (Family: none) | | | |
| JP | 2004-507063 | A | 04 March 2004 | US | 2004/0166392 | A1 | |
| | | | | paragraphs [0013]-[0015], [0062], [0077], table 3 | | | |
| | | | | WO | 2002/017422 | A2 | |
| | | | | CA | 2419136 | A1 | |
| | | | | CN | 1466787 | A | |
| | | | | KR | 10-2003-0024906 | A | |
| JP | 2005-47262 | A | 24 February 2005 | WO | 2005/005122 | A1 | |
| | | | | paragraphs [0001], [0016]-[0024] | | | |
| CN | 113555577 | A | 26 October 2021 | (Family: none) | | | |

Form PCT/ISA/210 (patent family annex) (January 2015)

**EP 4 349 906 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H6119928 A
- JP H9199145 A
- JP 2004269782 A